# FASCICULE DE BREVET EUROPEEN

(11) **EP 2 886 467 B1**
(45) Date de publication et mention de la délivrance du brevet: **15.03.2017**
(21) Numéro de dépôt: 14198372.6
(22) Date de dépôt: 16.12.2014
(51) Int. Cl.: B64G 1/22, B64G 1/44, B64G 1/66, F16F 1/373

(54) **Dispositif antichoc pour structure dépliable**
Stoßdämpfende Vorrichtung für aufklappbare Struktur
Shock-absorber device for extendable structure

(30) Priorité: 18.12.2013 FR 1302977
(43) Date de publication de la demande: 24.06.2015
(73) Titulaire: Thales, 92400 Courbevoie (FR)
(72) Inventeur: Mistral, Alain, 06150 Cannes La Bocca (FR); Legrand, Silvain, 06000 Nice (FR); Blons, Gaël, 06400 Cannes (FR)
(74) Mandataire: Collet, Alain

(56) Documents cités:
- EP-A1- 0 059 673
- FR-A1- 2 596 205
- US-A- 3 606 211
- US-A1- 2003 173 467

## Description

L'invention concerne une structure comprenant au moins deux panneaux dépliables et un dispositif de calage et antichoc destiné à éviter que les panneaux ne s'entrechoquent lorsqu'ils sont repliés l'un contre l'autre.

L'invention s'applique tout particulièrement mais non exclusivement au domaine spatial et notamment dans des structures de panneaux solaires ou d'antennes plates de satellite qui sont formés de différents panneaux articulés entre eux et dont le déploiement intervient dans l'espace. De nombreuses autres applications peuvent être envisagées aussi bien dans le domaine spatial que sur terre.

Les panneaux sont articulés entre eux au moyen d'articulations auto motorisées comme par exemple celles décrites dans les demandes de brevet FR 2 635 077 et FR 2 902 763. En position repliée, avant et lors du lancement du satellite, des tirants maintiennent les panneaux repliés les uns contre les autres. Lors du déploiement du satellite dans l'espace, les tirants sont libérés permettant ainsi le déploiement de la structure.

En position repliée, notamment lors du lancement du satellite, la structure est soumise à de nombreuses contraintes mécaniques, comme des vibrations. Les panneaux solaires ou les éléments plats d'antenne sont souvent de grande dimension et les vibrations peuvent entrainer des chocs entre panneaux voisins pouvant entrainer des détériorations comme des fissures ou même des ruptures.

Pour limiter ces risques des dispositifs de calage et antichocs amortisseurs peuvent être disposés, notamment aux coins des panneaux, pour éviter que ceux-ci ne s'entrechoquent. Ces dispositifs sont fixés à un premier panneau et un second panneau voisin vient prendre appui contre les dispositifs antichocs lorsque la structure est en position repliée. De tels dispositifs sont par exemple décrits dans les documents US 2003/173467 et US 3 606 211.

Ledit document US 2003/173467 est considéré comme l'art antérieur le plus proche et décrit les caractéristiques du préambule de la revendication 1.

Cette solution nécessite une mise en oeuvre longue et fastidieuse. De plus des anomalies de déploiement se sont produites ayant pour cause une adhérence du dispositif antichoc sur le panneau contre lequel le dispositif prend appui.

L'invention vise à pallier tout ou partie des problèmes cités plus haut en proposant de simplifier et de faciliter la réalisation du dispositif antichoc.

A cet effet, l'invention a pour objet une structure comprenant au moins deux panneaux dépliables et un dispositif antichoc destiné à éviter que les panneaux ne s'entrechoquent lorsqu'ils sont repliés l'un contre l'autre, caractérisée en ce que le dispositif antichoc comprend un support fixé au premier panneau, une capsule formant une butée contre laquelle vient s'appuyer le second panneau selon un sens d'appui, et un amortisseur disposé dans un espace formé entre le support et la capsule, en ce que la capsule et le support forment deux éléments, en ce qu'un premier des deux éléments comprend au moins un ergot, en ce que le second des deux éléments comprend au moins un logement destiné à recevoir l'ergot et en ce que la capsule est configurée de façon à ce que l'ergot pénètre dans le logement par déformation élastique de la capsule.

L'invention sera mieux comprise et d'autres avantages apparaîtront à la lecture de la description détaillée d'un mode de réalisation donné à titre d'exemple, description illustrée par le dessin joint dans lequel :
les figures 1a et 1b représentent une structure de panneaux en position dépliée pour la figure 1 a et en position repliée pour la figure 1b ;
les figures 2a et 2b représentent un premier mode de réalisation d'un dispositif antichoc fixé sur un des panneaux de la structure selon l'invention ;
les figures 3a et 3b représentent un second mode de réalisation d'un dispositif antichoc fixé sur un des panneaux de la structure selon l'invention ;
la figure 4 représente en perspective le dispositif antichoc des figures 3a et 3b ;
la figure 5 représente en vue éclatée le dispositif antichoc des figures 3a et 3b.

Par souci de clarté, les mêmes éléments porteront les mêmes repères dans les différentes figures.

L'invention trouve une utilité particulière dans une structure adaptée au déploiement de panneaux installés à bord d'un satellite. L'invention peut également être mise en oeuvre sur terre, par exemple pour une antenne déployable destinée à être transportée en différents lieux pour son utilisation. Le transport entre les lieux d'utilisation nécessite le repliage de l'antenne et son utilisation se fait déployée.

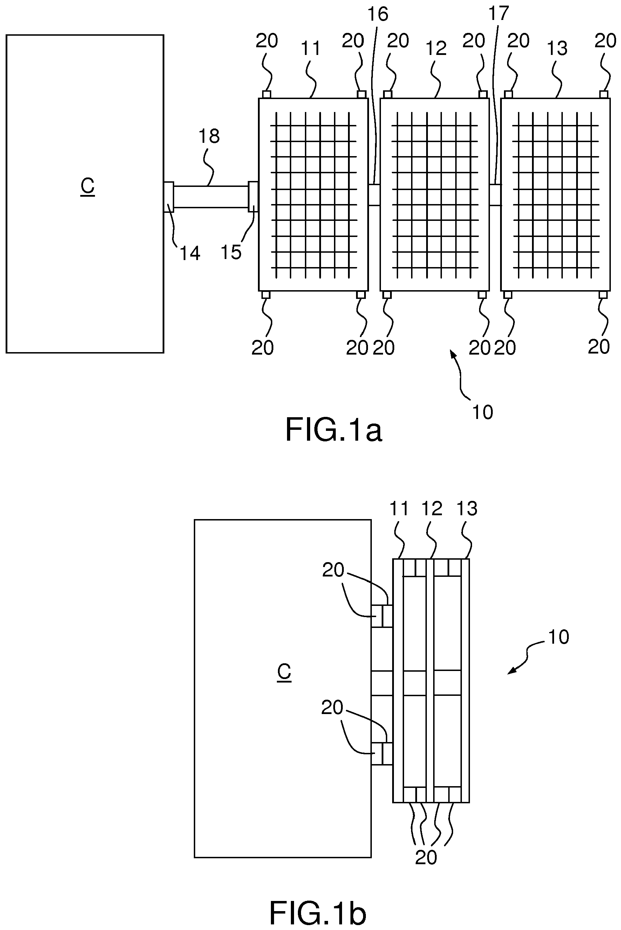

Les figures 1a et 1b représentent une structure 10 comprenant trois panneaux 11, 12 et 13 destinés à équiper un satellite dont le corps porte le repère C. Il peut s'agir par exemple de panneaux solaires destinés à alimenter le satellite en énergie électrique ou encore de panneaux d'antenne destinés à émettre ou à recevoir des signaux de télécommunication. La structure possède plusieurs articulations permettant de la déployer. Plus précisément, lors du lancement du satellite les panneaux 11, 12 et 13 sont repliés les uns contre les autres comme représenté sur la figure 1b et une fois que le satellite a atteint sa position dans l'espace, les panneaux sont déployés. A cet effet, la structure comprend, dans l'exemple représenté, quatre articulations 14, 15, 16 et 17. L'articulation 14 relie un bras 18 de la structure 10 au corps C du satellite dans lequel sont installés notamment des équipements électroniques. L'articulation 15 relie le bras 18 au panneau 11, l'articulation 16 relie les panneaux 11 et 12 et l'articulation 17 relie les panneaux 12 et 13. Les panneaux 11, 12 et 13 sont plans et rectangulaires. Ils s'étendent dans le plan de la figue 1a en position déployée. Les articulations 14, 15, 16 et 17 possèdent un degré de liberté en rotation ce qui permet de replier les panneaux 11, 12 et 13 en accordéon les uns contre les autres. Les articulations sont avantageusement auto-motorisées telle que par exemple décrites dans les demandes de brevet FR 2 635 077 et FR 2 902 763.

Comme on l'a expliqué plus haut, lors du lancement, le satellite est soumis à des contraintes mécaniques sévères telles que des vibrations importantes. Pour éviter que les panneaux en position repliée ne s'entrechoquent lors du lancement et plus généralement lorsqu'ils sont soumis à des contraintes mécaniques, la structure 10 comprend des cales solidaires des panneaux 11, 12, 13 et servant de butée. Dans l'exemple représenté, quatre dispositifs antichocs 20 équipent chacun des panneaux. Les dispositifs antichocs servent également de cale pour maintenir les différents panneaux 11, 12 et 13 à distance les uns des autres. Les dispositifs antichocs 20 sont avantageusement identiques afin de standardiser leur production en série. Un dispositif antichoc 20 est monté à chacun des coins d'un panneau. En position replié, un dispositif antichoc 20 d'un panneau vient en butée contre un autre dispositif antichoc 20 du panneau voisin. Les dispositifs antichocs 20 peuvent aussi servir de butée entre un panneau et le corps du satellite. Le nombre de dispositifs antichocs 20 peut être plus important. Il est défini en fonction des dimensions des panneaux, de leur rigidité et des contraintes mécaniques qu'ils doivent supporter. Il est également possible de disposer des dispositifs antichocs 20 de telle sorte qu'un dispositif antichoc 20 fixée à un panneau puisse venir en appui directement contre le panneau voisin. Une fonction des dispositifs antichocs 20 est de caler les panneaux entre eux, c'est-à-dire de maintenir les panneaux à distance les uns des autres lorsque la structure est en position repliée. Une autre fonction des dispositifs antichocs 20 est d'amortir d'éventuels efforts qu'un panneau pourrait exercer sur son voisin notamment lorsque la structure est soumise à des vibrations, ce qui est notamment le cas lors du lancement pour une structure équipant un satellite.

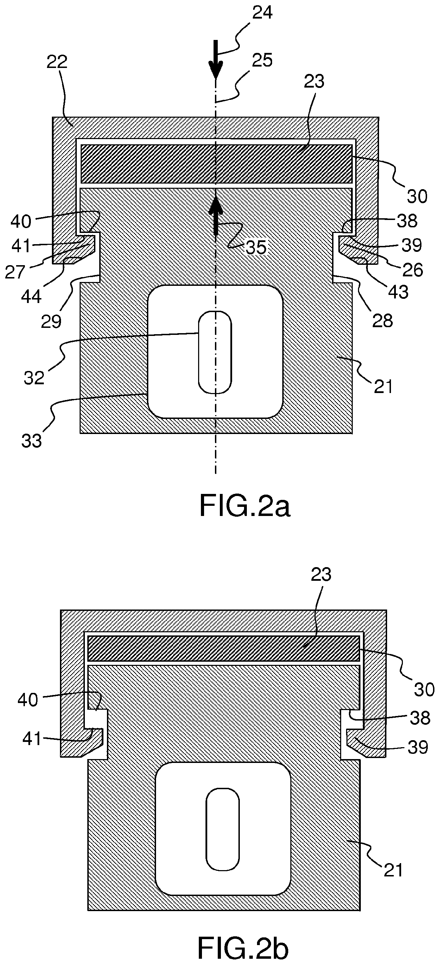

Les figures 2a et 2b représentent un premier mode de réalisation d'un dispositif antichoc 20 selon l'invention. Le dispositif antichoc 20 comprend un support 21 destiné à être fixé à un premier panneau, par exemple le panneau 11, une capsule 22 formant une butée contre laquelle vient s'appuyer un second panneau voisin du premier panneau 11, par exemple le panneau 12, et un amortisseur 23. L'appui du second panneau 12 sur la capsule 22 se fait selon un sens d'appui 24 porté par un axe 25.

Dans l'exemple représenté, la capsule 22 comprend deux ergots 26 et 27. Le support 21 comprend deux logements 28 et 29. Le logement 28 est destiné à recevoir l'ergot 26 et le logement 29 est destiné à recevoir l'ergot 27. La capsule 22 est configurée de façon à ce qu'un des ergots pénètre dans un des logements par déformation élastique de la capsule 22.

Chacun des deux logements 28 et 29 est associé à un des deux ergots 26 et 27. Les deux logements 28, 29 et les deux ergots 26, 27 sont symétriques par rapport l'axe 25 portant le sens d'appui 24.

L'invention peut être mise en oeuvre avec un seul ergot réalisé dans la capsule 22 associé à un seul logement réalisé dans le support 21. On peut également prévoir plus deux ergots, chacun associé à un logement.

Dans l'exemple représenté, le ou les ergots sont réalisés dans la capsule 22 et le ou les logements sont réalisés dans le support 21. Il est également possible d'inverser logements et ergots. Autrement dit le ou les ergots peuvent être réalisés dans le support 21 et le ou les logements peuvent être réalisés dans la capsule 22.

L'amortisseur 23 est disposé dans un espace 30 formé entre le support 21 et la capsule 22.

Pour fixer le support 21 sur son panneau, le support 21 dispose d'un trou 32 dans lequel on peut faire passer le corps d'une vis ou d'un rivet. Une tête de la vis ou du rivet peut être masquée dans un lamage 33 du support 21. Le rivet ou la vis est fixée au panneau correspondant. Le trou 32 et le lamage forment un exemple de moyens de fixation du dispositif 20 au premier panneau. Ces moyens sont avantageusement réglables selon la direction 25. Pour réaliser ce réglage, le trou 32 est par exemple oblong, comme représenté sur les figures 2a et 2b. Le réglage est obtenu avant serrage de la vis (ou du rivet) passant dans le trou 32. Le réglage permet d'améliorer le calage des panneaux entre eux lorsqu'ils sont repliés dans la position de la figure 1 b. Le réglage de la position du dispositif 20 est tel que le dispositif 20 exerce une légère pression sur le panneau en vis-à-vis. L'amortisseur 23 est donc légèrement comprimé lorsque la structure 10 est au repos. Cette précharge évite que la capsule 22 ne se décolle du panneau voisin lorsque la structure 10 est soumise à de légères vibrations.

Avantageusement, le support 21 et la capsule 22 sont configurés pour permettre une translation de la capsule 22 par rapport au support 21 lorsque les ergots 26, 27 sont disposés dans leur logement 28, 29 respectifs. La translation suit le sens d'appui 24 et permet de réduire le volume de l'espace 30 de façon à permettre un travail de l'amortisseur 23. L'amortisseur 23 est par exemple formé d'un bloc de matériau souple configuré pour se déformer sous l'effet d'un appui du second panneau 12 sur la capsule 21. L'amortisseur 23 est par exemple formé d'un matériau monobloc élastomère.

La translation de la capsule 22 dans le sens 24 permet de comprimer l'amortisseur 23. La figure 2b représente l'amortisseur 23 comprimé entre la capsule 22 et le support 21. L'élastomère choisi peut avoir différentes propriétés mécaniques. On peut choisir un matériau ayant de simples propriétés élastiques. La compression de l'amortisseur 23 entraine alors une simple réaction proportionnelle à l'effort subi par la capsule 22. On peut également choisir un matériau ayant des propriétés d'absorption énergétique afin d'absorber une partie de l'énergie de choc des panneaux entre eux. Dans ce type de matériau, l'énergie de choc est ensuite dissipée sous forme de chaleur.

Avantageusement, les ergots 26, 27 et les logements 28, 29 associés sont configurés pour limiter la translation de la capsule 22 par rapport au support 21 dans un sens 35 opposé au sens d'appui 24. La limitation de la translation dans le sens 35 permet de retenir la capsule 22. Cette limitation de la translation est assurée dans le mode de réalisation représenté sur les figures 2a et 2b. Plus précisément, le logement 28 comprend une face 38 sensiblement perpendiculaire à l'axe 25 sur laquelle peut s'appuyer une face 39 de l'ergot 26. Lorsque le dispositif antichoc 20 comprend deux ergots et des logements associés, les différents couples d'ergots et de logements associés peuvent comprendre des faces semblables venant en contact simultanément. Sur la figure 2a, les faces 38 et 39 sont au contact l'une de l'autre. De même, le logement 29 comprend une face 40 sensiblement perpendiculaire à l'axe 25 sur laquelle s'appuie une face 41 de l'ergot 27.

Sur la figure 2b, lorsqu'une pression est exercée sur la capsule 22 dans le sens d'appui 24, les faces 38 et 39 d'une part et 40 et 41 se décollent permettant la translation de la capsule 22. Lorsque la pression exercée sur la capsule 22 est relâchée, l'amortisseur 23 repousse la capsule 22 dans le sens 35 et le mouvement de la capsule 22 dans le sens 35 est limité lorsque les faces 38 à 41 viennent au contact deux à deux.

Avantageusement, les ergots 26 et 27 et les logements correspondants 28 et 29 sont configurés de façon à permettre une précontrainte de l'amortisseur 23 lorsque les ergots 26 et 27 sont disposés dans leur logement respectif 28 et 29. Cette configuration est obtenue en adaptant les dimensions du support 21, de la capsule 22 et de l'amortisseur 23 suivant l'axe 25. Cette précontrainte nécessite un effort sur la capsule 22 dans le sens d'appui 24 pour la mise en place des ergots 26 et 27 dans leur logement respectif 28 et 29. Une fois les ergots 26 et 27 dans leur logements respectifs 28 et 29, cette précontrainte permet au moins d'assurer, en l'absence d'appui sur la capsule 22, un contact certain des faces 38 et 39 d'une part et 40 et 41 d'autre part quelque soient les tolérances de fabrication suivant l'axe 25 des trois pièces mécaniques constituant le dispositif antichoc 20, le support 21, la capsule 22 et l'amortisseur 23. Il est également possible d'augmenter cette précontrainte en fonction d'autres contraintes de fonctionnement de la structure 20.

Les ergots 26 et 27 peuvent comprendre des pans inclinés, respectivement 43 et 44, permettant de faciliter la mise en place de la capsule 22. Plus précisément, l'assemblage de la capsule 22 sur le support 21 est réalisé par translation de la capsule 22 dans le sens d'appui 24. Les ergots 26 et 27 viennent au contact de l'amortisseur 23 puis du support 21. Ce contact se fait sur les pans inclinés 43 et 44 qui tendent à écarter les ergots 26 et 27 perpendiculairement à l'axe 25 par déformation élastique de la capsule 22. Lorsque les ergots 26 et 27 atteignent leur logement respectif 28 et 29, les ergots 26 et 27 reprennent leur position d'origine par rapport à la capsule 22 grâce à l'élasticité de la capsule 22.

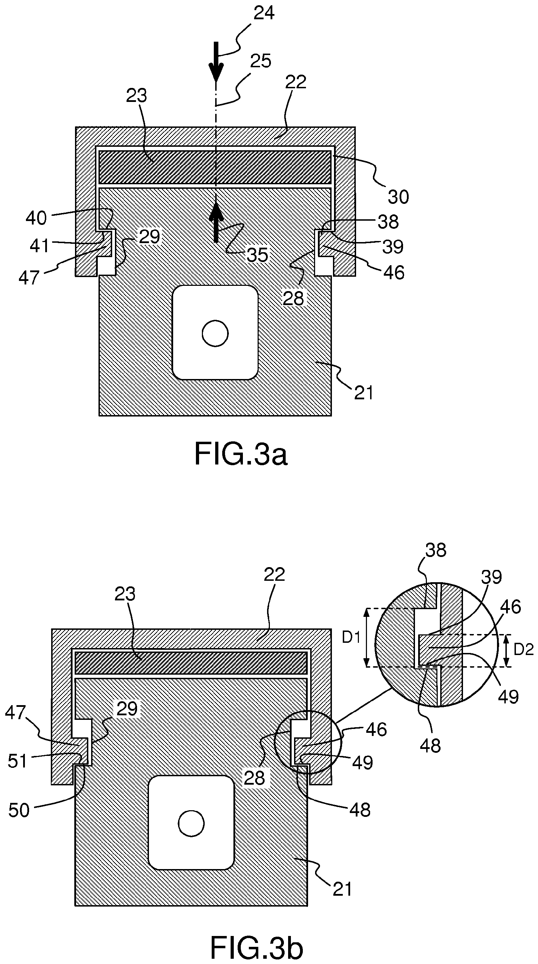

Les figures 3a et 3b représentent un second mode de réalisation d'un dispositif antichoc 20. On retrouve le support 21, la capsule 22 et l'amortisseur 23. Les ergots de la capsule 22 diffèrent et portent ici les repères 46 et 47. Dans ce mode de réalisation, le logement 28 est destiné à recevoir l'ergot 46 et le logement 29 est destiné à recevoir l'ergot 47. Les ergots 46, 47 et les logements 28, 29 sont configurés pour limiter la translation de la capsule 22 par rapport au support 21 suivant le sens 35, comme précédemment et suivant le sens d'appui 24. La limitation de la translation suivant le sens d'appui 24 permet de limiter l'écrasement de l'amortisseur 23.

On peut retrouver dans ce second mode de réalisation la précontrainte décrite dans le premier mode. Par ailleurs, il est bien entendu que les limitations de translation de la capsule 22 dans les sens 24 et 35 ainsi que la précontrainte peuvent être mises en oeuvre quelque soit le nombre de couple ergot-logement.

Pour la limitation de la translation suivant le sens 35, on retrouve dans le second mode une face 39 appartenant à l'ergot 46 pouvant venir en appui sur la face 38 du logement 28 ainsi qu'une face 41 appartenant à l'ergot 47 pouvant venir en appui sur la face 40 du logement 28. Ces deux appuis sont visibles sur la figure 3a.

Pour la limitation de la translation suivant le sens d'appui 24, l'ergot 46 comprend une face 49, sensiblement parallèle à la face 39, et pouvant venir en appui sur une face 48 du logement 28. La face 48 est sensiblement parallèle à la face 38. De même, l'ergot 47 comprend une face 51, sensiblement parallèle à la face 41, et pouvant venir en appui sur une face 50 du logement 29. La face 50 est sensiblement parallèle à la face 40.

Autrement dit, le logement 28 comprend deux faces 38 et 48 se faisant sensiblement face et séparées d'une première distance D1 s'étendant selon une direction 25 portant le sens d'appui 24, l'ergot 46 pouvant venir en appui sur l'une ou l'autre des deux faces 38 et 48. Pour ne pas surcharger la figure, la direction portant le sens d'appui 24 est parallèle à l'axe 25 et porte le même repère. Une seconde distance D2 correspondante de l'ergot 46 est inférieure à la première distance D1, la seconde distance D2 étant définie entre les deux faces 39 et 49 de l'ergot 46 destinées à venir en appui chacune alternativement contre l'une des faces 38 et 48 du logement 28. Les distances D1 et D2 sont représentées sur une vue partielle agrandie de l'ergot 46 à l'intérieur du logement 28. Les distances D1 et D2 se retrouvent également pour l'ergot 47 et le logement 29. On définit des distances dites correspondantes du fait de leur même direction, en l'occurrence la direction 25.

Le parallélisme des différentes faces peut être approximatif. Il suffit que les différentes faces puissent venir en appui l'une contre l'autre. De même, une direction perpendiculaire au sens d'appui 24 peut être sensiblement décalée angulairement de la direction 25.

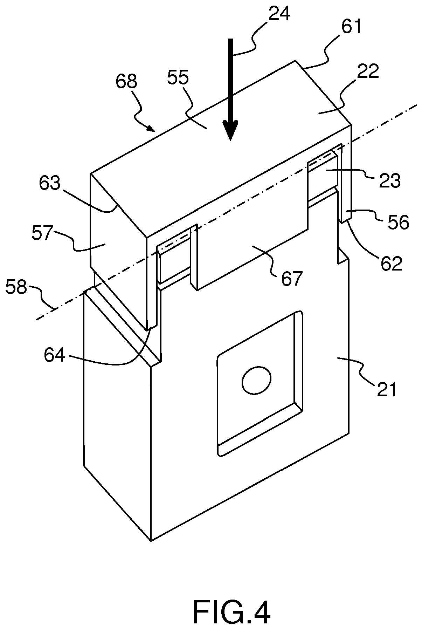

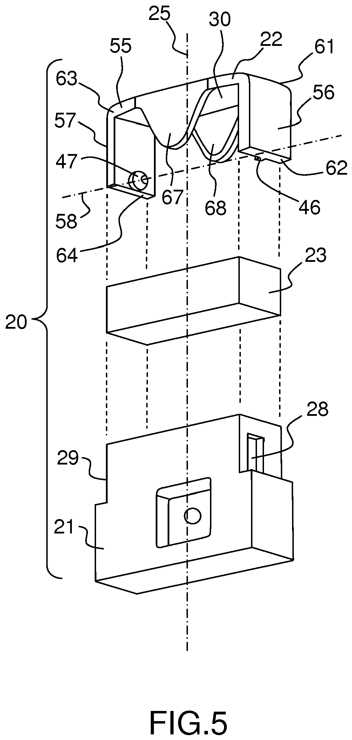

Les figures 4 et 5 représentent en perspective le dispositif antichoc 20. Sur la figure 4, le dispositif est assemblé dans la position de la figure 2a ou 3a. Sur la figure 5, le dispositif est représenté en vue éclatée. Ces deux figures permettent notamment de visualiser un exemple de forme d'ergot et de logement associé.

La capsule 22 comporte avantageusement une première plaque 55 perpendiculaire à la direction d'appui 24 et contre lequel vient s'appuyer le second panneau 12, deux secondes plaques 56 et 57 perpendiculaires à la première plaque 55 et aptes à se déformer élastiquement pour permettre aux ergots 46 et 47 de pénétrer dans leur logement respectif 28 et 29, la déformation élastique des secondes plaques 56 et 57 se faisant dans une direction 58 parallèle à la première plaque 55. Dans le mode de réalisation représenté, les ergots 46 et 47 sont solidaires de chacune des secondes plaques 56 et 57. Les plaques 55, 56 et 57 ainsi que les ergots 46 et 47 sont avantageusement réalisés dans une pièce monobloc.

La capsule 22 est par exemple réalisée en matière plastique qui peut être moulée. A titre d'alternative pour une fabrication en séries moins importantes, on pourra réaliser la capsule 22 par polymérisation en trois dimensions d'une résine, la polymérisation étant réalisée à partir d'un modèle numérique de la capsule 22. Un tel procédé de fabrication est connu dans la littérature anglo-saxonne sous le nom de « direct manufacturing ». Pour une utilisation de l'invention à bord d'un satellite, on pourra par exemple mettre en oeuvre un polyétheréthercétone également connu par son abréviation : PEEK. Ce matériau présente de bonnes caractéristiques mécaniques compatibles avec un environnement sévère tel que l'environnement spatial. Ce matériau présente notamment une bonne élasticité permettant au plaques 56 et 57 de se déformer dans leur domaine élastique pour assurer la mise en place des ergots 46 et 47 dans leur logement respectif 28 et 29.

Les faces 39 et 49 pour l'ergot 46 et les faces 41 et 51 pour l'ergot 47 peuvent avoir des aires différentes. En effet, les faces 39 et 41 ne servent que pour retenir la capsule 22 en position sur le support 21, en enfermant l'amortisseur 23 dans l'espace 30. L'effort de retenue de la capsule 22 peut être faible et il n'est fonction que de la géométrie des composants 21, 22 et 23 du dispositif antichoc 20. Par contre les faces 49 et 51 peuvent encaisser des efforts beaucoup plus importants qui viennent en complément de l'écrasement de l'amortisseur 23. Ces efforts sont fonction des chocs que peut encaisser le dispositif antichoc 20. Avantageusement, les faces 49 et 51 sont prolongées de façon à ce que leur aire soit supérieure à l'aire respective des faces 39 et 41.

Plus précisément, les secondes plaques 56 et 57 s'étendent chacune entre deux extrémités 61, 62 pour la plaque 56 et 63, 64 pour la plaque 57. Pour chacune des deux plaques 56 et 57, une première des deux extrémités 61 ou 63 est fixée à la première plaque 55, l'ergot 46 ou 47 est fixé à une seconde des deux extrémités 62 ou 64. La face 49 ou 51 de l'ergot 46 ou 47 vient dans le prolongement de la seconde extrémité 62 ou 64 de la seconde plaque 56 ou 57 de façon à augmenter l'aire d'appui de la capsule 22 contre le support 21 pour limiter la translation suivant le sens d'appui 24.

Sur les figures 4 et 5, les ergots 46 et 47 possèdent une section circulaire et s'étendent selon la direction 58. Les faces 39, 41, 49 et 51 sont en pratique réduite chacune à une ligne parallèle à la direction 58. Pour l'appui des faces 39 et 41 un appui sensiblement linéique peut suffire pour retenir la capsule dans le sens 35. Par contre pour limiter la translation de la capsule 22 dans le sens 24, l'extrémité 62 pour l'ergot 56 et l'extrémité 64 pour l'ergot 57 prolongent respectivement les lignes formant les faces 49 et 51 afin d'augmenter les aires des surfaces d'appui des ergots 46 et 47 sur le support 21.

Avantageusement, la capsule 22 comprend deux troisièmes plaques 67 et 68 perpendiculaires à la première plaque 55 et aux secondes plaques 56 et 57. Les troisièmes plaques 67 et 68 délimitent l'espace 30 contenant l'amortisseur 23. Les plaques 67 et 68 permettent de contenir l'amortisseur 23 pour lui éviter de s'échapper de l'espace 30 qui lui est réservé. Sur la figure 4 les plaques 67 et 68 ont un contour sensiblement rectangulaire et sur la figure 5 les plaques 67 et 68 ont un contour sensiblement triangulaire. Dans la position des figures 2a et 3a, c'est-à-dire en l'absence d'appui sur la capsule 22 dans le sens 24, les plaques peuvent recouvrir en partie le support 21 pour fermer localement l'espace 30. Il n'est pas nécessaire que les plaques 67 et 68 s'étendent complètement entre les plaques 56 et 57. Il est possible de laisser l'espace 30 en partie ouvert entre les plaques 67, 68 et les plaques 56 et 57.

## Revendications

1. Structure comprenant au moins deux panneaux (11, 12, 13) dépliables et un dispositif antichoc (20) destiné à éviter que les panneaux (11, 12, 13) ne s'entrechoquent lorsqu'ils sont repliés l'un contre l'autre, **caractérisée en ce que** le dispositif antichoc (20) comprend un support (21) fixé au premier panneau (11), une capsule (22) formant une butée contre laquelle vient s'appuyer le second panneau (12) selon un sens d'appui (24), et un amortisseur (23) disposé dans un espace (30) formé entre le support (21) et la capsule (22), **en ce que** la capsule (22) et le support (21) forment deux éléments, **en ce qu'**un premier (22) des deux éléments comprend au moins un ergot (26, 27 ; 46, 47), **en ce que** le second (21) des deux éléments comprend au moins un logement (28, 29) destiné à recevoir l'ergot (26, 27 ; 46, 47) et **en ce que** la capsule (22) est configurée de façon à ce que l'ergot (26, 27 ; 46, 47) pénètre dans le logement (28, 29) par déformation élastique de la capsule (22).

2. Structure selon la revendication 1, **caractérisée en ce que** le support (21) et la capsule (22) sont configurés pour permettre une translation de la capsule (22) par rapport au support (21) lorsque l'ergot (26, 27) est disposé dans le logement (28, 29), et **en ce que** la translation suit le sens d'appui (24) et permet de réduire le volume de l'espace (30) de façon à permettre un travail de l'amortisseur (23).

3. Structure selon la revendication 2, **caractérisée en ce que** l'ergot (26, 27 ; 46, 47) et le logement (28, 29) sont configurés pour limiter la translation suivant un sens opposé (35) au sens d'appui (24).

4. Structure selon la revendication 3, **caractérisée en ce que** l'ergot (26, 27 ; 46, 47) et le logement (28, 29) sont configurés pour limiter la translation suivant le sens d'appui (24).

5. Structure selon la revendication 4, **caractérisée en ce que** le logement (28, 29) comprend deux faces (38, 40, 48, 50) se faisant face et séparées d'une première distance (D1) s'étendant selon une direction (25) portant le sens d'appui (24), l'ergot (46, 47) pouvant venir en appui sur l'une ou l'autre des deux faces (38, 40, 48, 50), et **en ce qu'**une seconde distance (D2) correspondante de l'ergot (46, 47) est inférieure à la première distance (D1), la seconde distance (D2) étant définie entre deux faces (39, 41, 49, 51) de l'ergot (46, 47) destinées à venir en appui chacune alternativement contre l'une des faces (38, 40, 48, 50) du logement (28, 29).

6. Structure selon l'une des revendications précédentes, **caractérisée en ce que** l'amortisseur (23) est formé d'un bloc de matériau souple configuré pour se déformer sous l'effet d'un appui du second panneau (12) sur la capsule (22).

7. Structure selon la revendication 6, **caractérisée en ce que** l'amortisseur (23) est formé d'un matériau monobloc élastomère.

8. Structure selon l'une des revendications précédentes **caractérisée en ce que** l'ergot (26, 27, 46, 47) et le logement (28, 29) sont configurés de façon à permettre une précontrainte de l'amortisseur (23) lorsque l'ergot (26, 27, 46, 47) est disposé dans le logement (28, 29).

9. Structure selon l'une des revendications précédentes, comprenant deux logements (28, 29) et deux ergots (26, 27, 46, 47) selon l'une des revendications précédentes, **caractérisée en ce que** chacun des deux logements (28, 29) est associé à un des deux ergots (26, 27, 46, 47) et **en ce que** les deux logements (28, 29) et les deux ergots (26, 27, 46, 47) sont symétriques par rapport un axe (25) portant le sens d'appui (24).

10. Structure selon la revendication 9, **caractérisée en ce que** la capsule (22) comporte une première plaque (55) perpendiculaire à la direction d'appui (24) et contre laquelle vient s'appuyer le second panneau (12), deux secondes plaques (56, 57) perpendiculaires à la première plaque (55) et aptes à se déformer élastiquement pour permettre aux ergots (46, 47) de pénétrer dans leur logement respectif (28, 29), la déformation élastique des secondes plaques (56, 57) se faisant dans une direction (58) parallèle à la première plaque (55).

11. Structure selon la revendication 10 en tant que revendication dépendante de la revendication 5, **caractérisée en ce que** les secondes plaques (56, 57) s'étendent chacune entre deux extrémités (61, 62, 63, 64), **en ce que** pour chacune des deux secondes plaques (56, 57) une première (61, 63) des deux extrémités est fixée à la première plaque (55), **en ce que** les ergots (46, 47) sont respectivement fixés à une seconde (62, 64) des deux extrémités, **en ce que** les ergots (46, 47) comprennent chacun une face (40, 51) destinée à venir en appui contre l'une des faces (48, 50) du logement (28, 29) correspondant pour limiter la translation suivant le sens d'appui (24) et **en ce que** la face (49, 51) de chaque ergot (46, 47) vient dans le prolongement de la seconde extrémité (62, 64) de la seconde plaque (56, 57) respective de façon à augmenter l'aire d'appui de la capsule (22) contre le support (21) pour limiter la translation suivant le sens d'appui (24).

12. Structure selon l'une quelconque des revendications 10 ou 11, **caractérisée en ce que** la capsule (22) comprend deux troisièmes plaques (67, 68) perpendiculaires à la première (55) et aux secondes (56, 57) plaques, les troisièmes plaques (67, 68) délimitant l'espace (30) contenant l'amortisseur (23).

13. Structure selon l'une des revendications précédentes **caractérisée en ce que** le dispositif antichoc (20) comprend des moyens de fixation au premier panneau (11) réglables selon une direction (25) portant le sens d'appui (24).

## Patentansprüche

1. Struktur, die wenigstens zwei aufklappbare Platten (11, 12, 13) und eine Stoßdämpfervorrichtung (20) umfasst, die verhindern soll, dass die Platten (11, 12, 13) aneinander schlagen, wenn sie aufeinander geklappt werden, **dadurch gekennzeichnet, dass** die Stoßdämpfervorrichtung (20) Folgendes umfasst: ein an der ersten Platte (11) befestigtes Lager (21), eine Kapsel (22), die einen Anschlag bildet, an dem die zweite Platte (12) zur Anlage in einer Anlagerichtung (24) kommt, und einen Dämpfer (23), der in einem Raum (30) angeordnet ist, der zwischen dem Lager (21) und der Kapsel (22) gebildet wird, dadurch, dass die Kapsel (22) und das Lager (21) zwei Elemente bilden, dadurch, dass ein erstes (22) der zwei Elemente wenigstens einen Haken (26, 27; 46, 47) umfasst, dadurch, dass das zweite (21) der zwei Elemente wenigstens eine Aufnahme (28, 29) zum Aufnehmen des Hakens (26, 27; 46, 47) umfasst, und dadurch, dass die Kapsel (22) so konfiguriert ist, dass der Haken (26, 27; 46, 47) durch die elastische Verformung der Kapsel (22) in die Aufnahme (28, 29) eintritt.

2. Struktur nach Anspruch 1, **dadurch gekennzeichnet, dass** das Lager (21) und die Kapsel (22) so konfiguriert sind, dass sie eine Translationsbewegung der Kapsel (22) relativ zu dem Lager (21) zulassen, wenn sich der Haken (26, 27) in der Aufnahme (28, 29) befindet, und dadurch, dass die Translationsbewegung der Anlagerichtung (24) folgt und es zulässt, dass das Volumen des Raums (30) reduziert wird, damit der Dämpfer (23) funktionieren kann.

3. Struktur nach Anspruch 2, **dadurch gekennzeichnet, dass** der Haken (26, 27; 46, 47) und die Aufnahme (28, 29) zum Begrenzen der Translationsbewegung in einer der Anlagerichtung (24) entgegengesetzten Richtung (35) konfiguriert sind.

4. Struktur nach Anspruch 3, **dadurch gekennzeichnet, dass** der Haken (26, 27; 46, 47) und die Aufnahme (28, 29) zum Begrenzen der Translationsbewegung in der Anlagerichtung (24) konfiguriert sind.

5. Struktur nach Anspruch 4, **dadurch gekennzeichnet, dass** die Aufnahme (28, 29) zwei Flächen (38, 40, 48, 50) aufweist, die einander gegenüberliegen und durch eine erste Distanz (D1) getrennt sind, die sich in einer Richtung (25) entsprechend der Anlagerichtung (24) erstreckt, wobei der Haken (46, 47) an der einen oder anderen der beiden Flächen (38, 40, 48, 50) anliegen kann, und dadurch, dass eine zweite entsprechende Distanz (D2) des Hakens (46, 47) kürzer ist als die erste Distanz (D1), wobei die zweite Distanz (D2) zwischen zwei Flächen (39, 41, 49, 51) des Hakens (46, 47) definiert wird, die jeweils abwechselnd an einer der Flächen (38, 40, 48, 50) der Aufnahme (28, 29) zur Anlage kommen sollen.

6. Struktur nach einem der vorherigen Ansprüche, **dadurch gekennzeichnet, dass** der Dämpfer (23) aus einem Block aus flexiblem Material gebildet ist, das zum Verformen unter der Wirkung einer Anlage der zweiten Platte (12) an der Kapsel (22) konfiguriert ist.

7. Struktur nach Anspruch 6, **dadurch gekennzeichnet, dass** der Dämpfer (23) aus einem einstückigen elastomeren Material gebildet ist.

8. Struktur nach einem der vorherigen Ansprüche, **dadurch gekennzeichnet, dass** der Haken (26, 27; 46, 47) und die Aufnahme (28, 29) so konfiguriert sind, dass der Dämpfer (23) vorgespannt werden kann, wenn sich der Haken (26, 27; 46, 47) in der Aufnahme (28, 29) befindet.

9. Struktur nach einem der vorherigen Ansprüche, die zwei Aufnahmen (28, 29) und zwei Haken (26, 27; 46, 47) nach einem der vorherigen Ansprüche umfasst, **dadurch gekennzeichnet, dass** jede der zwei Aufnahmen (28, 29) mit einem der zwei Haken (26, 27; 46, 47) assoziiert ist, und dadurch, dass die zwei Aufnahmen (28, 29) und die zwei Haken (26, 27; 46, 47) symmetrisch relativ zu einer Achse (25) entsprechend der Anlagerichtung (24) sind.

10. Struktur nach Anspruch 9, **dadurch gekennzeichnet, dass** die Kapsel (22) ein erstes Paneel (55) lotrecht zur Anlagerichtung (24), an dem die zweite Platte (12) zur Anlage kommt, und zwei zweite Paneele (56, 57) lotrecht zum ersten Paneel umfasst, die sich elastisch verformen können, damit die Haken (46, 47) in ihre jeweilige Aufnahme (28, 29) eintreten können, wobei die elastische Verformung der zweiten Paneele (56, 57) in einer Richtung (58) parallel zum ersten Paneel (55) auftritt.

11. Struktur nach Anspruch 10 in Abhängigkeit von Anspruch 5, **dadurch gekennzeichnet, dass** die zweiten Paneele (56, 57) jeweils zwischen zwei Enden (61, 62, 63, 64) verlaufen, dadurch, dass für jedes der zweiten Paneele (56, 57) ein erstes (61, 63) der beiden Enden an dem ersten Paneel (55) befestigt ist, dadurch, dass die Haken (46, 47) jeweils an einem zweiten (62, 64) der zwei Enden befestigt sind, dadurch, dass die Haken (46, 47) jeweils eine Fläche (40, 51) aufweisen, die an einer der Flächen (48, 50) der entsprechenden Aufnahme (28, 29) zur Anlage kommen sollen, um die Translationsbewegung in der Anlagerichtung (24) zu begrenzen, und dadurch, dass die Fläche (49, 51) jedes Hakens (46, 47) in die Verlängerung des zweiten Endes (62, 64) des jeweiligen zweiten Paneels (56, 57) eintritt, um den Anlagebereich der Kapsel (22) an dem Lager (21) zu vergrößern, um die Translationsbewegung in der Anlagerichtung (24) zu begrenzen.

12. Struktur nach Anspruch 10 oder 11, **dadurch gekennzeichnet, dass** die Kapsel (22) zwei dritte Paneele (67, 68) lotrecht zum ersten (55) und zu den zweiten (56, 57) Paneelen umfasst, wobei die dritten Paneele (67, 68) den Raum (30) begrenzen, der den Dämpfer (23) enthält.

13. Struktur nach einem der vorherigen Ansprüche, **dadurch gekennzeichnet, dass** die Stoßdämpfervorrichtung (20) Mittel zum Befestigen an der ersten Platte (11) umfasst, die in einer Richtung (25) justierbar sind, die der Anlagerichtung (24) entspricht.

## Claims

1. A structure comprising at least two unfoldable panels (11, 12, 13) and a shock absorber device (20) intended to prevent said panels (11, 12, 13) from striking each other when they are folded against each other, **characterised in that** said shock absorber device (20) comprises a support (21) fixed to the first panel (11), a cover (22) forming a stop, against which the second panel (12) comes to bear in a bearing direction (24), and a damper (23) disposed in a space (30) formed between said support (21) and said cover (22), **in that** said cover (22) and said support (21) form two elements, **in that** a first (22) of said two elements comprises at least one catch (26, 27; 46, 47), **in that** the second (21) of said two elements comprises at least one receptacle (28, 29) intended to receive said catch (26, 27; 46, 47), and **in that** said cover (22) is configured so that said catch (26, 27; 46, 47) enters said receptacle (28, 29) through the elastic deformation of said cover (22).

2. The structure according to claim 1, **characterised in that** said support (21) and said cover (22) are configured to allow a translation movement of said cover (22) relative to said support (21) when said catch (26, 27) is disposed inside said receptacle (28, 29), and **in that** said translation movement is in said bearing direction (24) and allows the volume of said space (30) to be reduced so as to allow said damper (23) to operate.

3. The structure according to claim 2, **characterised in that** said catch (26, 27; 46, 47) and said receptacle (28, 29) are configured to limit said translation movement in an opposite direction (35) to said bearing direction (24).

4. The structure according to claim 3, **characterised in that** said catch (26, 27; 46, 47) and said receptacle (28, 29) are configured to limit said translation movement in said bearing direction (24).

5. The structure according to claim 4, **characterised in that** said receptacle (28, 29) comprises two faces (38, 40, 48, 50) that are opposite each other and are separated by a first distance (D1) extending in a direction (25) corresponding to said bearing direction (24), said catch (46, 47) being able to bear against either of said two faces (38, 40, 48, 50), and **in that** a second corresponding distance (D2) of said catch (46, 47) is shorter than said first distance (D1), said second distance (D2) being defined between two faces (39, 41, 49, 51) of said catch (46, 47) that are intended to each alternately bear against one of said faces (38, 40, 48, 50) of said receptacle (28, 29).

6. The structure according to any one of the preceding claims, **characterised in that** said damper (23) is formed from a block of flexible material that is configured to deform under the effect of said second panel (12) bearing against said cover (22).

7. The structure according to claim 6, **characterised in that** said damper (23) is formed by a one-piece elastomer material.

8. The structure according to any one of the preceding claims, **characterised in that** said catch (26, 27; 46, 47) and said receptacle (28, 29) are configured so as to allow said damper (23) to be pre-stressed when said catch (26, 27; 46, 47) is disposed inside said receptacle (28, 29).

9. The structure according to any one of the preceding claims, comprising two receptacles (28, 29) and two catches (26, 27; 46, 47) according to any one of the preceding claims, **characterised in that** each of said two receptacles (28, 29) is associated with one of said two catches (26, 27; 46, 47) and **in that** said two receptacles (28, 29) and said two catches (26, 27; 46, 47) are symmetrical relative to an axis (25) corresponding to said bearing direction (24).

10. The structure according to claim 9, **characterised in that** said cover (22) comprises a first plate (55) perpendicular to said bearing direction (24), against which said second panel (12) comes to bear, two second plates (56, 57) perpendicular to said first plate (55) and able to elastically deform to allow said catches (46, 47) to enter their respective receptacle (28, 29), the elastic deformation of said second plates (56, 57) occurring in a direction (58) parallel to said first plate (55).

11. The structure according to claim 10 as dependent on claim 5, **characterised in that** said second plates (56, 57) each extend between two ends (61, 62, 63, 64), **in that** for each of said second plates (56, 57), a first (61, 63) of the two ends is fixed to said first plate (55), **in that** said catches (46, 47) are respectively fixed to a second (62, 64) of said two ends, **in that** said catches (46, 47) each comprise a face (40, 51) intended to come to bear against one of said faces (48, 50) of the corresponding receptacle (28, 29) so as to limit the translation movement in said bearing direction (24) and **in that** said face (49, 51) of each catch (46, 47) enters the extension of said second end (62, 64) of said respective second plate (56, 57) so as to increase the bearing area of said cover (22) against said support (21) so as to limit the translation movement in said bearing direction (24).

12. The structure according to claim 10 or 11, **characterised in that** said cover (22) comprises two third plates (67, 68) perpendicular to said first (55) and to said second (56, 57) plates, said third plates (67, 68) delimiting said space (30) containing said damper (23).

13. The structure according to any one of the preceding claims, **characterised in that** said shock absorber device (20) comprises means for fixing to said first plate (11) that can be adjusted in a direction (25) corresponding to said bearing direction (24).
